# EUROPEAN PATENT APPLICATION

(11) **EP 0 676 554 A1**
(43) Date of publication of application: **11.10.1995**
(21) Application number: 95102396.9
(22) Date of filing: 21.02.1995
(51) Int. Cl.: F16C 33/78, F16J 15/16

(54) **A sealing device for rolling contact bearings**

(30) Priority: 18.03.1994 IT TO940196
(71) Applicant: SKF INDUSTRIE S.p.A., I-10123 Torino (IT)
(72) Inventor: Micca, Mario, I-10127 Torino (IT); Maselli, Vito Carlo, I-70026 Modugno (Bari) (IT)
(74) Representative: Lotti, Giorgio

(57) **Abstract**

The sealing device comprises an annular gasket (10) secured to one of the two bearing races and provided with a lip (12) slidably contacting a metal surface secured to the other race. The elastic material of the gasket has a thermal expansion coefficient that is higher than that of steel. The gasket (10) is capable of reaching two opposite arrangements: a first cold arrangement (10') in which lip (12) is elastically urges against said surface (11) exerting a predetermined starting pressure thereupon; a second arrangement, as a function of the temperature of operation, rotated in response to thermal expansion, in which lip (12)is elastically urged against surface (11) exerting a predetermined operation pressure thereupon. Operation pressure is inferior to starting pressure.

## Description

### Field of the invention

The present invention falls within the field of bearing assemblies. Particularly, the invention refers to a sealing device for rolling contact bearings.

### Background of the invention

Sealing devices are known where sealing action is demanded to a gasket integral with one of the two races of the bearing. The gasket is provided with one or more lips that are maintained in sliding contact against corresponding facing surfaces integral with the other bearing race.

The lips of the gasket, of elastomeric material, are continuously subjected to sliding friction, and thereby reach considerably high operation temperature. With time, high temperature causes permanent yielding of the lips, possibly compromising elastic features and, consequently, sealing features especially relative to fluids.

### Summary of the invention

It is an object of the present invention to provide a sealing device having particular structural and thermomechanic characteristics allowing to decrease pressure of sliding contact at operation temperature. As a result, an advantageous friction torque will be accomplished and a decrease of maximum operation temperature. By resolving the above cited problems, the present invention improves the performances of the bearing assembly and prolongs its life.

To meet these and other objects, the invention provides a sealing device for rolling contact bearings, of the type comprising a sealing gasket consisting of a substantially annular body of an elastic material secured to one of the two bearing races and provided with at least one lip slidably contacting a metal surface secured to the other bearing race. The elastic material forming the gasket has a thermal expansion coefficient higher than that of steel. The gasket is provided with at least one circumferential groove determining a side narrowing located intermediate said lip and the point of attachment of the gasket to its support. The gasket is capable of reaching two opposite arrangements: a first cold arrangement in which at least one lip is elastically urged against said surface exerting a predetermined starting pressure thereupon; a second arrangement, as a function of the temperature of operation, rotated in response to thermal expansion, in which at least one lip is elastically urged against said surface exerting a predetermined operation pressure thereupon. Operation pressure is inferior with respect to starting pressure.

### Brief description of the drawings

In order that the present invention may be well understood there will now be described an embodiment thereof, given by way of example, reference being made to the accompanying drawings, in which:
FIG. 1 is a radial cross section, to an enlarges scale, of a first embodiment of a sealing device according to the present invention;
FIGS. 2, 3 and 4 are radial cross sections of second, third and fourth embodiments, respectively, alternative to the one depicted in FIG. 1.

### Detailed description of preferred embodiments

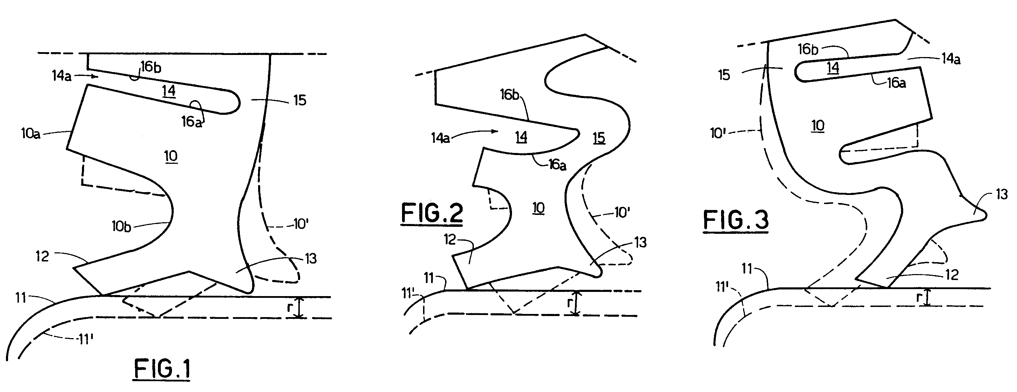

With reference initially to FIG. 1, numeral 10 designates a sealing device according to the present invention, consisting of a substantially annular-shaped body or gasket of polymeric material. Body 10 is integral with the outer race (not shown) of the bearing, and can be secured thereto directly or by means of an intermediate semi-rigid mounting member, for example such as the one disclosed in European Patent EP-A-0541036.

Body 10 has the function of performing sealing action on the inner race 11 of the bearing by means of a main lip 12 and a dirt guard lip 13. More specifically, body 10 provides a thicker outer (upper) portion 10a in close proximity to the point of attachment to the mounting race, and a, inner (lower) appendix 10b which bifurcates forming lips 12 and 13.

According to the invention, a circumferential groove 14 extends from the radial side of outer portion 10a facing the outside. Groove 14 determines two facing cylindrical surfaces 16a, 16b substantially coaxial relative to the rotational axis of the bearing. The opening 14a of groove 14 is on the outwardly facing side of the bearing; on the opposite, inwardly facing side, groove 14 determines a thin side narrowing 15. More precisely, side narrowing 15 is located in an outer position (considering the annular shape of body 10) or upper position (as depicted in the drawings), proximate to the point of attachment to the outer race of the bearing or an intermediate mounting member.

Still referring to FIG. 1, the dashed line shows the shape 10' taken by the body 10 in its initial, cold resting condition. In this condition, the position of the inner race 11 of the bearing is depicted by the dashed line 11', wherein sealing gasket 10 urges elastically its main lip 12 slidably contacting race 11.

According to the present invention, gasket 10 is of an elastic material, for example polymer, having a thermal expansion coefficient superior to that of the steel of which the bearing races are made of. This feature, when applied to a body 10 having the above described arrangement, has the direct effect of causing gasket 10 to thermally expand in heating up owing to the heat generated within the bearing and the friction of the sliding lip. While expanding in reaching normal operation temperature, gasket 10 deflects slightly towards the outer side of the bearing, reducing the pressure in the contact zone between the lip and the sliding surface of the inner race. The arrangement of groove 14 causes the free portion of gasket 10 beneath narrowing 15 to rotate clockwise. The inner cylindrical surface 16a of groove 14 rotates towards the outer cylindrical surface 16b, determining a slight rise of the main lip 12. This rise is of greater than the radial thermal expansion "r" that is gained in steady state by inner race 11. Obviously, also in this normal operation condition contact between lip 12 and its facing sliding surface is assured.

In order that the principles of this invention can be advantageously applied, the characteristic parameters of the material forming the sealing gasket 10 should preferably fall within the following ranges:
- Young's modulus should preferably range within 4 MPa and 20 MPa;
- the thermal expansion coefficient should preferably be of about 10⁻⁴, and in any case should be at least four or five times greater than that of steel (1,2⁻⁵) forming the bearings.

As set forth, pressure of the contact between the gasket 10 and its counter-face 11 in steady state is considerably less than initial pressure. Therefore, normal operation temperature will never reach those critical levels causing typical inconveniences cited in the preamble of the description. The gasket is thermally self-adjusting and capable of finding an equilibrium position and a consequent equilibrium temperature which provides longer life to the gasket and the grease of the bearing. When power dissipated by friction between the gasket and its metal interface increases, the gasket's temperature rises causing the gasket to deflect and decrease pressure in the contact zone. As a result, friction generated by contact decreases and temperature drops consequently. The gasket reaches an operational position of equilibrium at a controlled temperature. This equilibrium position is not unique; it varies slightly depending on thermal conditions of the bearing's working environment.

FIGS. 2 to 4, wherein like numerals designate like parts throughout the several views, depict three respective variant embodiments of the one shown in FIG. 1. Particularly, the embodiment of FIG. 3 differs from those of FIGS. 1 and 2 as the gasket deflects towards the inside of the bearing instead of outwardly.

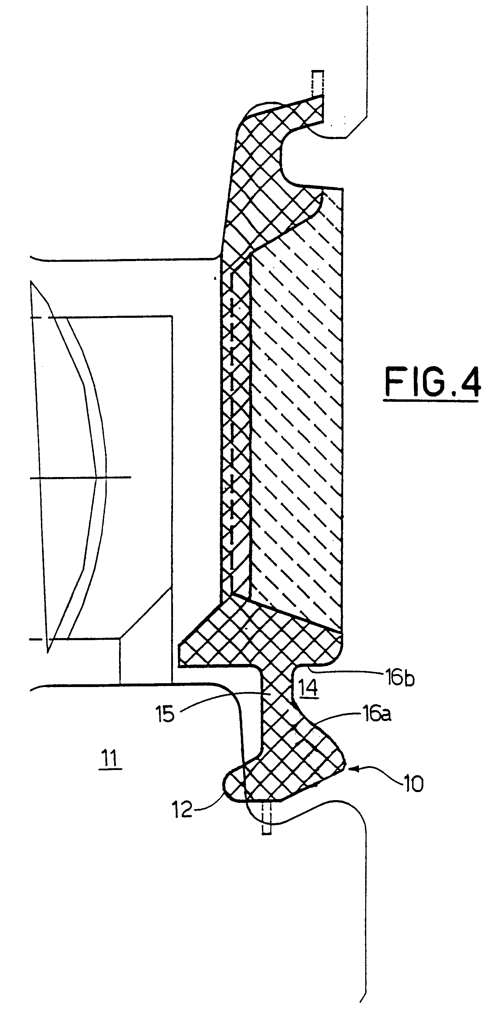

While in the embodiments illustrated in FIGS. 1 to 3 sealing action is performed radially, with reference to FIG. 4 there is depicted an alternative embodiment where the sealing device of the present invention is adapted for performing axial contact.

While a specific embodiment of the invention has been disclosed, it is to be understood that such disclosure has been merely for the purpose of illustration and that the invention is not to be limited in any manner thereby. Various modifications will be apparent to those skilled in the art in view of the foregoing example. The scope of the invention is to be limited only by the appended claims.

## Claims

1. A sealing device for rolling contact bearings, of the type comprising a sealing gasket (10) consisting of a substantially annular body of an elastic material secured to one of the two bearing races and provided with at least one lip (12) slidably contacting a metal surface secured to the other bearing race (11), characterised in that the elastic material forming the gasket (10) has a thermal expansion coefficient higher than that of steel; the gasket (10) being provided with at least one circumferential groove (14) determining a side narrowing (15) located intermediate the lip (12) and the point of attachment of the gasket to its support; the gasket (10) being capable of reaching two opposite arrangements: a first cold arrangement (10') in which at least one lip (12) is elastically urged against said surface (11) exerting a predetermined starting pressure thereupon; a second arrangement, as a function of the temperature of operation, rotated in response to thermal expansion, in which at least one lip (12) is elastically urged against said surface (11) exerting a predetermined operation pressure thereupon, said operation pressure being inferior with respect to said starting pressure.

2. A sealing device according to claim 1, characterised in that the body (10) is constituted by a polymeric material having a Young's modulus ranging within about 4 MPa and about 20 MPa.

3. A sealing device according to claim 1, characterised in that the body (10) is constituted by a polymeric material having a Poisson ratio ranging within about 0.4 and about 0.5.

4. A sealing device according to claim 1, characterised in that the body (10) is constituted by a polymeric material having a thermal expansion coefficient at least four or five times that of the steel of the bearing.

5. A sealing device according to claim 4, characterised in that the body (10) is constituted by a polymeric material having a thermal expansion coefficient of about 10⁻⁴.

6. A sealing device according to claim 1, characterized in that said circumferential groove (14) determines two facing cylindrical surfaces (16a, 16b) substantially coaxial to the rotational axis of the bearing, said surfaces being susceptible of getting closer to each other in reaching said second arrangement.

7. A sealing device according to claims 1 and 6, characterized in that said groove (14) has an opening (14a) located on the side facing the outside of the bearing, said side narrowing (15) being disposed on the opposite side facing the inside of the bearing.

8. A sealing device according to claim 1, characterized in that the gasket (10) is secured to the outer race of the bearing through an intermediate semi-rigid mounting member.
